# EUROPEAN PATENT SPECIFICATION

(11) **EP 2 639 932 B1**
(45) Date of publication and mention of the grant of the patent: **10.10.2018**
(21) Application number: 11856967.2
(22) Date of filing: 30.01.2011
(51) Int. Cl.: H02J 5/00

(54) **WIRELESS ELECTRICAL POWER TRANSMISSION SYSTEM AND ITS CONTROL METHOD**
DRAHTLOSES STROMÜBERTRAGUNGSSYSTEM UND STEUERVERFAHREN DAFÜR
SYSTÈME DE TRANSMISSION DE COURANT ÉLECTRIQUE SANS FIL ET SON PROCÉDÉ DE COMMANDE

(43) Date of publication of application: 18.09.2013
(73) Proprietor: Haier Group Corporation, Qingdao, Shandong 266101 (CN); Haier Group Technology R&D Center, Qingdao, Shandong 266101 (CN)
(72) Inventor: LI, Dan, Shandong 266103 (CN); DONG, Xiulian, Shandong 266103 (CN); QIN, Chao, Shandong 266103 (CN); LOU, Bingbing, Shandong 266103 (CN); LI, Ming, Shandong 266103 (CN)
(74) Representative: Ilgart, Jean-Christophe
(86) International application number: PCT/CN2011/070814
(87) International publication number: WO 2012/100435

(56) References cited:
- CN-A- 1 996 711
- US-A1- 2008 197 802
- US-A1- 2010 148 590
- US-A1- 2010 176 659
- WENZHEN FU ET AL: "Study on frequency-tracking wireless power transfer system by resonant coupling", IEEE 6TH INTERNATIONAL POWER ELECTRONICS AND MOTION CONTROL CONFERENCE, 2009 : IPEMC '09 ; WUHAN, CHINA, 17 - 20 MAY 2009, IEEE, PISCATAWAY, NJ, USA, 17 May 2009 (2009-05-17), pages 2658-2663, XP031535579, DOI: 10.1109/IPEMC.2009.5157857 ISBN: 978-1-4244-3556-2
- FU, WENZHEN ET AL.: 'Study on Frequency-tracking Wireless Power Transfer System by Resonant Coupling' THE WORLD OF INVERTERS August 2009, pages 2658 - 2663, XP031485111

## Description

### Technical Field

The present application relates to a wireless electrical power transmission system with good thermal stability and its control method.

### Technical Background

With the progress of science and technologies, wireless electrical power transmission technologies have been increasingly applied universally, which makes people's lives easier and more convenience, without the fetter of various power wires. Currently, some small-sized electronic devices may be charged in a wireless power supplying manner. For example, electronic devices such as a wireless charger, a wireless rechargeable mouse and a mobile phone may be automatically charged by a wireless power supplying device.

For a wireless power supplying system of medium power (e.g. hundreds of watts), its primary side (i.e. the transmitting side) and tis secondary side (i.e. the receiving side) are operated in a deep coupled and synchronized state because of the large power, and a resonance circuit is typically employed as an output stage. Due to influence by factors such as component parameters and environment, a drift of a coil resonance frequency may be caused, which results in energy transmission in the system deflecting from the predetermined frequency point, thereby reducing the efficiency of the energy transmission; further, an energy loss may cause increased temperature of the coil and devices, and the resultant change of the parameter of the functional device, which varies with the environmental change, will be accumulated and cause the frequency drift, thereby forming a vicious cycle. As a result, a system failure may be caused, even the equipment might be destroyed.

Currently, the solution for solving the above problems focuses on enabling the frequency stability. However, due to the inherent nature of physical properties of the devices per se, it is difficult to solve the problems fundamentally.

US 2010/148590 A1 discloses a non-contact electric power transmission circuit according to an embodiment of the invention includes an electric power transmission circuit and an electric power receiving circuit. The electric power transmission circuit includes a full bridge circuit and a resonant type full bridge circuit. A direct-current power supply is used as an input of the full bridge circuit, the full bridge circuit includes two sets of switching elements, two switching elements being connected in series in each set of the switching elements, a drive circuit alternately feeds a pulse signal to gates of the switching elements to perform switching of the direct-current input in the full bridge circuit, and a serial resonant circuit of a resonant capacitor and an electric power transmission coil is connected to an output of the full bridge circuit in the resonant type full bridge circuit. The electric power receiving circuit includes an electric power receiving coil and a rectifying and smoothing circuit. The electric power receiving coil is electromagnetically coupled to the electric power transmission coil, and the rectifying and smoothing circuit rectifies an output of the electric power receiving coil. In the non-contact electric power transmission circuit, a push-pull output PWM control circuit is provided in the drive circuit that controls the full bridge circuit, and only one of the switching elements in each set of switching elements performs a regenerative operation. Therefore, a non-contact electric power transmission circuit in which the resonant type full bridge circuit can be controlled by PWM control at a level similar to that of a phase shift operation can be provided.

### Summary of the Invention

An object of the present invention is to provide a wireless electrical power transmission system according to independent claim 1 with good thermal stability and its control method according to independent claim 4, to achieve the stable temperature increase, improve the transmission efficiency of the system, and reduce the heat load of the system. Further improvements and embodiments are provided in the dependent claims.

In the technical solution of the present invention, the system is controlled by software, to eliminate the frequency point drift caused by the parameter of the device per se and the environmental temperature, precisely control the alternating current frequency characteristic and the frequency point of the wireless electrical power transmission circuit, solve the heat generation problem of the critical component, improve the power transmission efficiency of the wireless electrical power transmission circuit.

In the method, the operating frequency of the primary coil is controlled and adjusted in real-time by software, so that the system is operated stably at the frequency point, the transmission of the active power is improved, and the generation of the reactive power is reduced, thereby enhancing the transmission efficiency of the wireless power supplying system, while eliminating the heat generation problem of the coil and the device. The method may be implemented by integrated circuits, so that the circuit design is simplified and the security and stability of the system is improved.

The object of the present invention may be achieved as follows. The frequency of the transmitting coil is controlled by software, and the frequency drift caused by the parameter difference of the device per se is reduced as compared to the implementation of the hardware circuit; the frequency of the coil is tracked and adjusted in a real-time manner by software according to a real-time phase, to continuously approximate to the predetermined frequency point, so that the system can be operated stably at the frequency point, the system transmission efficiency is improved, and the heat generation problem is reduced; the opening and closing of a switching tube in an inverter circuit is controlled by software, thus a large current which is formed in the system loop due to the simultaneous opening of the switching tube is avoided, and the heat generation of the coil and devices is avoided; and the discontinuous energy transmission caused by the simultaneous opening or closing of the switching tube is also avoided.

A control method of the wireless electrical power transmission system of the present invention includes steps of:
providing control signals P1 and P2 with a frequency fp by a control circuit according to a frequency point fk, where fp = fk;
opening or closing a switching tube by a driving circuit according to the control signals P1 and P2, so that an alternating voltage is formed at both ends of a transmitting coil, so that the high-frequency oscillation of the transmitting coil is started;
obtaining a frequency f of the transmitting coil, after the voltage sampling by a voltage comparison circuit;
processing the signal of the frequency f of the transmitting coil through a phase locked loop circuit, and feeding the processed signal back to the control circuit together with the phase difference signal;
adjusting outputs of the control signals P1 and P2 by the control circuit according to the feedback signal; and
repeating the above steps, so that the system is operated stably at the frequency point.

The wireless electrical power transmission system of the present invention includes a transmitting coil frequency generating part and a coil frequency phase tracking and feedback part, where the transmitting coil frequency generating part includes a control circuit, a driving circuit and an inverter circuit, and the coil frequency phase tracking and feedback part includes a frequency detection circuit and a phase locked loop circuit.

With respect to the transmitting coil frequency generating part, the control circuit is controlled by software to output two opposite control signals, each of which controls the opening and closing of a switching tube after passing through the driving circuit, to alternatively generate voltages V1 and V2 for the transmitting coil, so that high-frequency oscillation is formed in the coil to enable energy transmission. Depending on the resonance frequency, the control circuit may generate two signals P1 and P2, which are opposite under the control of software and more precise compared with that under the control of implementation purely by hardware LC circuits. Thus, standard alternating voltages can be formed at both ends of the transmitting coil.

With respect to the coil frequency phase tracking and feedback part, voltages V1 and V2 at both ends of the transmitting coil are sampled, and then compared by a voltage comparison circuit to obtain an oscillation frequency f in the transmitting coil. Specifically, if V1>V2, a voltage comparator in the voltage comparison circuit outputs a high level, and if V1<V2, the voltage comparator outputs a low level, thereby obtaining the oscillation frequency f of the transmitting coil. A frequency f0 is obtained after the oscillation frequency f of the transmitting coil is processed by a phase comparator and a Voltage Controlled Oscillator (VCO). Eventually, f0 = f because of the effect of the phase locked loop. A phase difference signal Δφ may be generated during the comparison between the frequencies f and f0. The oscillation frequency f of the transmitting coil and the phase difference signal Δφ are fed back to the control circuit, which then compares the frequency f0 with the fixed frequency point fk to obtain the size of the frequency drift, and then adjusts the frequency fp of the signals P1 and P2 according to the least square method or the median method. The frequency fp is compared and adjusted continuously in the system and eventually the frequency f is equal to the fixed frequency point fk, so that the system can be stabilized at the frequency point for energy transmission. The phase difference signal Δφ may be used by the control circuit to finely tune and output the delay of outputting the signals P1 and P2.

The phase locked loop is used to eliminate the drift phenomenon caused by a clock delay in a chip. The frequency signal is inputted to the phase locked loop to allow the consistency between the phase frequency of the frequency signal and that of a reference signal, so that the data drift phenomenon can be eliminated.

As described above, the wireless electrical power transmission system with good thermal stability includes the transmitting coil frequency generating circuit and the coil frequency phase tracking and feedback circuit, where the transmitting coil frequency generating circuit includes the control circuit, the driving circuit and the inverter circuit, and the coil frequency phase tracking and feedback circuit includes the frequency detection circuit and the phase locked loop circuit.

It is characterized in that the control circuit is controlled by software to output two opposite control signals, each of which controls the opening and closing of a switching tube after passing through the driving circuit, to alternatively generate voltages V1 and V2 for the transmitting coil and form high-frequency oscillation in the coil.

Depending on the resonance frequency, the control circuit may generate two signals P1 and P2, which are opposite under the control of software and more precise compared with that under the control of implementation purely by hardware LC circuits. Thus, standard alternating voltages can be formed at both ends of the transmitting coil.

The inconsistency of parameters of the system device, and variation of the device parameter due to heat generation of the system, may also cause the frequency drift. In this case, a phase tracking circuit may be used to solve the problem of the frequency drift.

The switching tubes would be opened or closed simultaneously due to the asynchronization of hardware switches. If the switching tubes in the inverter circuit are opened at the same time, then a large current will be generated in the loop, thus the temperatures of the device and the coil will be increased, and the system will generate heat. The simultaneous opening or closing of the switching tubes will disable the oscillation of the transmitting coil, and therefore disable the energy transmission.

The control signal may be delayed and tailed due to the difference of the device parameter or the influence of the environmental factor on the device parameter, resulting in the drift of the frequency point, as well as the phenomenon of the energy transmission interruption.

The inverter circuit is controlled precisely by software, so that the maximum active power and the minimum reactive power of the system are achieved. Therefore, the energy transmission efficiency of the system is improved while reducing the heat generation of system caused by the reactive power.

The advantage of the invention lies in that: the frequency of the transmitting coil is controlled by software, and the frequency drift caused by the parameter difference of the device per se is reduced as compared to the implementation of the hardware circuit.

The frequency of the coil is tracked and adjusted in a real-time manner by software according to a real-time phase, to continuously approximate to the predetermined frequency point, so that the system can be operated stably at the frequency point, the system transmission efficiency is improved, and the heat generation problem is reduced.

The precise control of the frequency point of the wireless electrical power transmission circuit, including the control of frequency and timing, are achieved by a Complex Programmable Logic Device (CPLD).

The opening and closing of a switching tube in an inverter circuit is controlled by software, thus a large current which is formed in the system loop due to the simultaneous opening of the switching tube is avoided, and the heat generation of the coil and devices is avoided; and the discontinuous energy transmission caused by the simultaneous opening or closing of the switching tube is also avoided.
1. Through the control by software, the frequency drift caused by parameter of the device per se and the environmental temperature is reduced, to achieve the precise control of the frequency point of the frequency wireless electrical power transmission circuit and alternating current frequency characteristics.
2. By the software-controlled method, the frequency of the coil can be quickly moved to the predetermined frequency point, for the purpose of stable operation.
3. The heat generation problem of key devices can be eliminated, to reduce the reactive power of the entire system, extend the circuit life, and improve the transmission efficiency of the wireless electrical power transmission circuit.

### Description of Drawings

Figure 1 is a block diagram showing the overall structure of the primary side of the system of the present invention.
Figure 2 is a block diagram showing control, driving and inverter parts of the present invention.
Figure 3 is a diagram showing the standard alternating voltage waveform formed at both output ends of an inverter at the primary side.
Figure 4 is a diagram showing the alternating voltage waveform caused by asynchronization of the hardware switches.
Figure 5 is a diagram showing the delayed and tailed waveform of the control signal caused by the device.
Figure 6 is a block diagram showing the coil frequency phase tracking and feedback part of the present invention.
Figure 7 is a main flow chart of the control of the present invention.

### Detailed description of the Preferred Embodiment

The wireless electrical power transmission system of the present invention includes a transmitting coil frequency generating part and a coil frequency phase tracking and feedback part. The transmitting coil frequency generating part includes a control circuit, a driving circuit and an inverter circuit, and the coil frequency phase tracking and feedback part includes a frequency detection circuit and a phase locked loop circuit.

The specific connection structure of the system is as follows.

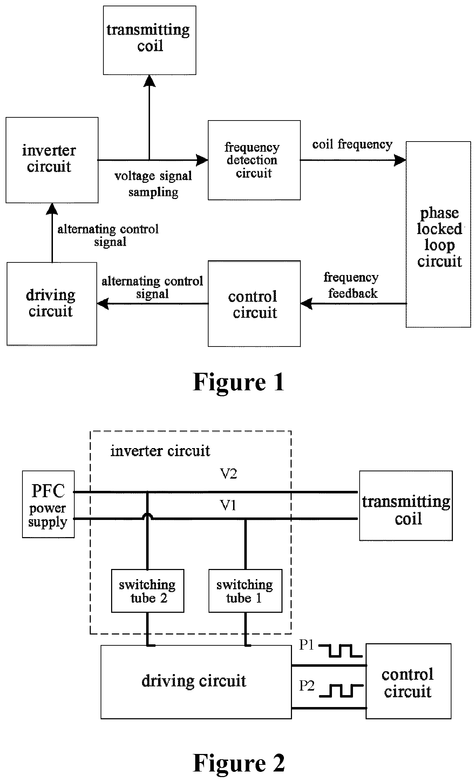

Referring to Figure 1, with respect to the transmitting coil frequency generating part, the control circuit refers to a Microprogrammed Control Unit (MCU) and its associated circuitry, and its output port is connected to the driving circuit; output ends of the driving circuit are respectively connected with control electrodes of a switching tube of the inverter circuit, thus constituting software-controlled frequency generating and controllable inverter circuits. The control circuit is controlled by software to output two opposite control signals, each of which controls the opening and closing of a switching tube after passing through the driving circuit, to alternatively generate voltages V1 and V2 for the transmitting coil, so that high-frequency oscillation is formed in the coil to enable energy transmission. Depending on the resonance frequency, the control circuit may generate two signals P1 and P2, which are opposite under the control of software and more precise compared with that under the control of implementation purely by hardware LC circuits. Thus, standard alternating voltages can be formed at both ends of the transmitting coil.

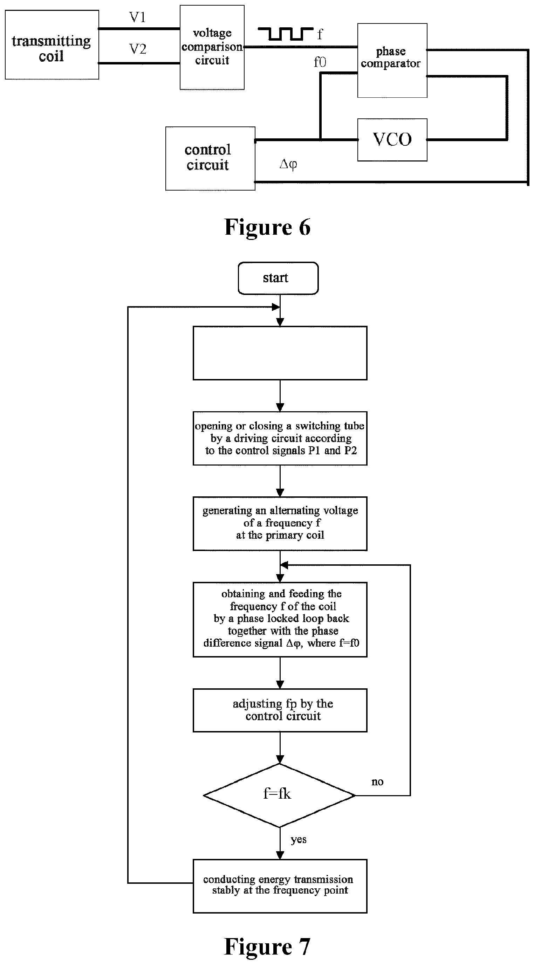

Referring to Figures 2 and 6, the coil frequency phase tracking and feedback part includes a frequency voltage sampling circuit and a phase locked loop circuit, and the signal output end of the phase locked loop circuit is connected to the control port of the control circuit.

With respect to the coil frequency phase tracking and feedback part, voltages V1 and V2 at both ends of the transmitting coil are sampled, and then compared by a voltage comparison circuit to obtain an oscillation frequency f in the transmitting coil. Specifically, if V1>V2, a voltage comparator in the voltage comparison circuit outputs a high level, and if V1<V2, the voltage comparator outputs a low level, thereby obtaining the oscillation frequency f of the transmitting coil. A frequency f0 is obtained after the oscillation frequency f of the transmitting coil is processed by a phase comparator and a Voltage Controlled Oscillator (VCO). Eventually, f0 = f because of the effect of the phase locked loop. A phase difference signal Δφ may be generated during the comparison between the frequencies f and f0. The oscillation frequency f of the transmitting coil and the phase difference signal Δφ are fed back to the control circuit, which then compares the frequency f0 with the fixed frequency point fk to obtain the size of the frequency drift, and then adjusts the frequency fp of the signals P1 and P2 according to the least square method or the median method. The frequency fp is compared and adjusted continuously in the system and eventually the frequency f is equal to the fixed frequency point fk, so that the system can be stabilized at the frequency point for energy transmission. The phase difference signal Δφ may be used by the control circuit to finely tune and output the delay of outputting the signals P1 and P2.

The phase locked loop is used to eliminate the drift phenomenon caused by a clock delay in a chip. The frequency signal is inputted to the phase locked loop to allow the consistency between the phase frequency of the frequency signal and that of a reference signal, so that the data drift phenomenon can be eliminated.

As described above, the wireless electrical power transmission system with good thermal stability includes the transmitting coil frequency generating circuit and the coil frequency phase tracking and feedback circuit, where the transmitting coil frequency generating circuit includes the control circuit, the driving circuit and the inverter circuit, and the coil frequency phase tracking and feedback circuit includes the frequency detection circuit and the phase locked loop circuit. The control circuit is controlled by software to output two opposite control signals, each of which controls the opening and closing of a switching tube after passing through the driving circuit, to form the high-frequency oscillation in the transmitting coil.

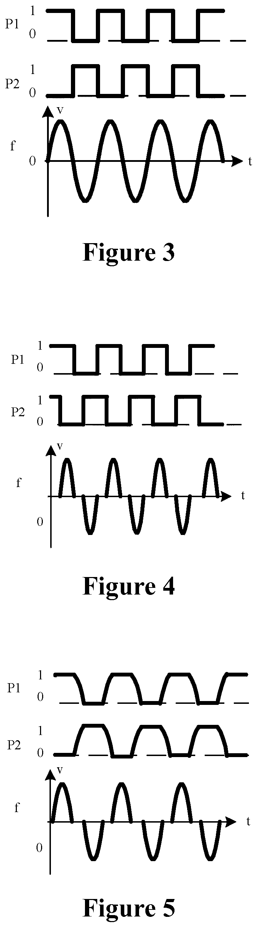

Depending on the resonance frequency, the control circuit may generate two signals P1 and P2, which are opposite under the control of software and more precise compared with that under the control of implementation purely by hardware LC circuits. Thus, standard alternating voltages can be formed at both ends of the transmitting coil, as shown in Figure 3.

Referring to Figure 5, the inconsistency of parameters of the system device, and variation of the device parameter due to heat generation of the system, may also cause the frequency drift. In this case, a phase tracking circuit may be used to solve the problem of the frequency drift.

Referring to Figure 4, the switching tubes would be opened or closed simultaneously due to the asynchronization of hardware switches. If the switching tubes in the inverter circuit are opened at the same time, then a large current will be generated in the loop, thus the temperatures of the device and the coil will be increased, and the system will generate heat. The simultaneous opening or closing of the switching tubes will disable the oscillation of the transmitting coil, and therefore disable the energy transmission.

The control signal may be delayed and tailed due to the difference of the device parameter or the influence of the environmental factor on the device parameter, resulting in the drift of the frequency point, as well as the phenomenon of the energy transmission interruption.

Referring to Figure 7, a control method of the wireless electrical power transmission system of the present invention includes steps of:
providing control signals P1 and P2 with a frequency fp by a control circuit according to a frequency point fk, where fp = fk;
opening or closing a switching tube by a driving circuit according to the control signals P1 and P2, so that an alternating voltage is formed at both ends of a transmitting coil, so that the high-frequency oscillation of the transmitting coil is started;
obtaining a frequency f of the transmitting coil, after the voltage sampling by a voltage comparison circuit;
processing the signal of the frequency f of the transmitting coil through a phase locked loop circuit, and feeding the processed signal back to the control circuit together with the phase difference signal;
adjusting outputs of the control signals P1 and P2 by the control circuit according to the feedback signal; and
repeating the above steps, so that the system is operated stably at the frequency point.

The inverter circuit is controlled precisely by software, so that the maximum active power and the minimum reactive power of the system are achieved. Therefore, the energy transmission efficiency of the system is improved while reducing the heat generation of system caused by the reactive power.

The above description merely relates to the preferred embodiments of the present invention, and is not intended to limit the present invention in any case. Although the present invention has been disclosed with the above preferred embodiment, the embodiment is not intended to limit the present invention. Those skilled in the art can amend and modify the above disclosed technical contents as equivalent embodiments, without departing from the scope of the technical solution of the present invention. However, the contents without departing from the technical solution of the present invention, any amendments, equivalent variations and modifications of the above embodiments based on the technical essence of the present invention, should fall into the scope of the technical solution of the present invention.

## Claims

1. A wireless electrical power transmission system, comprising a transmitting coil frequency generating circuit and a coil frequency phase tracking and feedback circuit, wherein the transmitting coil frequency generating circuit includes a control circuit, a driving circuit and an inverter circuit,
the control circuit is configured to be controlled by software to output two opposite control signals, each of which controls the opening and closing of a switching tube after passing through the driving circuit, to form high-frequency oscillation in the transmitting coil; **characterized in that** the coil frequency phase tracking and feedback circuit comprises:
a voltage comparison circuit, configured to compare voltages V1 and V2 at both ends of the transmitting coil to obtain an oscillation frequency f in the transmitting coil;
a phase comparator and a Voltage Controlled Oscillator, configured to process the oscillation frequency f of the transmitting coil to obtain a frequency f0;
the phase comparator is further configured to do a comparison between the frequencies f and f0 to generate a phase difference signal Δϕ;
the control circuit receives the oscillation frequency f and the phase difference signal Δϕ, and finely tunes and outputs a delay of outputting signals P1 and P2 using the phase difference signal Δϕ.

2. The system of claim 1, wherein the control circuit of the transmitting coil frequency generating circuit includes a Microprogrammed Control Unit, and an output port of the control circuit is connected to the driving circuit, output ends of the driving circuit are respectively connected with control electrodes of a switching tube of the inverter circuit, constituting software-controlled frequency generation and controllable inverter circuits.

3. The system of claim 1, wherein the coil frequency phase tracking and feedback circuit output end of the phase locked loop circuit is connected to a control port of the control circuit.

4. A control method of a wireless electrical power transmission system of claim 1, comprising steps of:
providing control signals P1 and P2 with a frequency fp by a control circuit according to a frequency point fk, wherein fp = fk;
opening or closing a switching tube by a driving circuit according to the control signals P1 and P2, so that an alternating voltage is formed at both ends of a transmitting coil, so that high-frequency oscillation of the transmitting coil is started;
the method being **characterized by** further comprising the steps of:
obtaining a frequency f of the transmitting coil, by voltage sampling by a voltage comparison circuit comparing voltages V1 and V2 at both ends of the transmitting coil; processing the signal of the frequency f of the transmitting coil through a phase locked loop circuit to thereby obtain a frequency f0, and feeding the processed signal back to the control circuit together with a phase difference signal, generated by a comparison of f and f0; adjusting outputs of the control signals P1 and P2 by the control circuit according to the feedback signal; and
repeating the above steps, so that the system is operated stably at the frequency point.

## Patentansprüche

1. Drahtloses Stromübertragungssystem, das eine Sendespulenfrequenz-Erzeugungsschaltung und eine Spulenfrequenz-Verfolgungs- und Rückkopplungsschaltung aufweist, wobei die Sendespulenfrequenz-Erzeugungsschaltung eine Steuerschaltung, eine Antriebsschaltung und eine Inverterschaltung umfasst,
wobei die Steuerschaltung konfiguriert ist, um durch Software gesteuert zu werden, um zwei entgegengesetzte Steuersignale auszugeben, von denen jedes das Öffnen und Schließen einer Schaltröhre steuert, nachdem es die Antriebsschaltung durchlaufen hat, um eine Hochfrequenzschwingung in der Sendespule auszubilden;
**dadurch gekennzeichnet, dass** die Spulenfrequenz-Verfolgungs- und Rückkopplungsschaltung aufweist:
eine Spannungsvergleichsschaltung, die konfiguriert ist, um Spannungen V1 und V2 an beiden Enden der Sendespule zu vergleichen, um eine Schwingungsfrequenz f in der Sendespule zu erhalten;
einen Phasenvergleicher und einen spannungsgesteuerten Oszillator, die konfiguriert sind, um die Schwingungsfrequenz f der Sendespule zu verarbeiten, um eine Frequenz f0 zu erhalten;
wobei der Phasenvergleicher ferner konfiguriert ist, um einen Vergleich zwischen den Frequenzen f und f0 durchzuführen, um ein Phasendifferenzsignal Δϕ zu erzeugen;
wobei die Steuerschaltung die Schwingungsfrequenz f und das Phasendifferenzsignal Δϕ empfängt und eine Verzögerung zum Ausgeben von Signalen P1 und P2 unter Verwendung des Phasendifferenzsignals Δϕ feinabstimmt und ausgibt.

2. System nach Anspruch 1, wobei die Steuerschaltung der Sendspulenfrequenz-Erzeugungsschaltung eine mikroprogrammierte Steuereinheit umfasst und ein Ausgabeanschluss der Steuerschaltung mit der Antriebschaltung verbunden ist, wobei Ausgabeenden der Antriebsschaltung jeweils mit Steuerelektroden einer Schaltröhre der Inverterschaltung verbunden sind, was softwaregesteuerte Frequenzerzeugungs- und steuerbare Inverterschaltungen ausbildet.

3. System nach Anspruch 1, wobei das Spulenfrequenz-Verfolgungs- und Rückkopplungsschaltung-Ausgabeende der Phasenregelkreisschaltung mit einem Steueranschluss der Steuerschaltung verbunden ist.

4. Steuerverfahren eines drahtlosen Stromübertragungssystems nach Anspruch 1, das die folgenden Schritte aufweist:
Bereitstellen von Steuersignalen P1 und P2 mit einer Frequenz fp durch eine Steuerschaltung gemäß einem Frequenzpunkt fk, wobei fp = fk;
Öffnen oder Schließen einer Schaltröhre durch eine Antriebsschaltung gemäß den Steuersignalen P1 und P2, so dass an beiden Enden einer Sendespule eine Wechselspannung ausgebildet wird, so dass eine Hochfrequenzschwingung der Sendespule gestartet wird;
wobei das Verfahren **dadurch gekennzeichnet ist, dass** es ferner die folgenden Schritte aufweist:
Gewinnen einer Frequenz f der Sendespule durch Spannungsabtasten durch eine Spannungsvergleichsschaltung, welche die Spannungen V1 und V2 an beiden Enden der Sendespule vergleicht;
Verarbeiten des Signals der Frequenz f der Sendespule durch eine Phasenregelkreisschaltung, um dadurch eine Frequenz f0 zu erhalten,
und Rückspeisen des verarbeiteten Signals in die Steuerschaltung zusammen mit einem Phasendifferenzsignal, das durch einen Vergleich von f und f0 erzeugt wird;
Einstellen von Ausgaben der Steuersignale P1 und P2 durch die Steuerschaltung gemäß dem Rückkopplungssignal; und
Wiederholen der vorstehenden Schritte, so dass das System an dem Frequenzpunkt stabil betrieben wird.

## Revendications

1. Système de transmission d'électricité sans fil, comprenant un circuit générateur de fréquence de bobine de transmission et un circuit de suivi de phase et de rétroaction de fréquence de bobine, dans lequel le circuit générateur de fréquence de bobine de transmission inclut un circuit de commande, un circuit de pilotage et un circuit inverseur,
le circuit de commande est configuré pour être commandé par logiciel pour fournir en sortie deux signaux de commande opposés, dont chacun commande l'ouverture et la fermeture d'un tube de commutation après traversée du circuit de pilotage, pour former une oscillation haute fréquence dans la bobine de transmission ;
**caractérisé en ce que** le circuit de suivi de phase et de rétroaction de fréquence de bobine comprend :
un circuit de comparaison de tension, configuré pour comparer des tensions V1 et V2 aux deux extrémités de la bobine de transmission pour obtenir une fréquence d'oscillation f dans la bobine de transmission ;
un comparateur de phase et un oscillateur commandé par tension, configurés pour traiter la fréquence d'oscillation f de la bobine de transmission pour obtenir une fréquence f0 ;
le comparateur de phase est en outre configuré pour faire une comparaison entre les fréquences f et f0 pour générer un signal de différence de phase Δϕ ;
le circuit de commande reçoit la fréquence d'oscillation f et le signal de différence de phase Δϕ, et affine et fournit en sortie un retard de signaux de sortie P1 et P2 à l'aide du signal de différence de phase Δϕ.

2. Système selon la revendication 1, dans lequel le circuit de commande du circuit générateur de fréquence de bobine de transmission inclut une unité de commande microprogrammée, et un port de sortie du circuit de commande est connecté au circuit de pilotage, des extrémités de sortie du circuit de pilotage sont respectivement connectées à des électrodes de commande d'un tube de commutation du circuit inverseur, constituant des circuits inverseurs de génération de fréquence et commandables commandés par logiciel.

3. Système selon la revendication 1, dans lequel l'extrémité de sortie de circuit de suivi de phase et de rétroaction de fréquence de bobine du circuit de boucle à verrouillage de phase est connectée à un port de commande du circuit de commande.

4. Procédé de commande d'un système de transmission d'électricité sans fil selon la revendication 1, comprenant les étapes :
la fourniture de signaux de commande P1 et P2 avec une fréquence fp par un circuit de commande selon un point de fréquence fk, dans lequel fp = fk ;
l'ouverture ou la fermeture d'un tube de commutation par un circuit de pilotage selon les signaux de commande P1 et P2, de sorte qu'une tension alternative soit formée aux deux extrémités d'une bobine de transmission, pour qu'une oscillation haute fréquence de la bobine de transmission soit démarrée ;
le procédé étant **caractérisé en ce qu'**il comprend en outre les étapes :
l'obtention d'une fréquence f de la bobine de transmission, par échantillonnage de tension par un circuit de comparaison de tensions comparant les tensions V1 et V2 aux deux extrémités de la bobine de transmission ;
le traitement du signal de la fréquence f de la bobine de transmission à travers un circuit de boucle à verrouillage de phase pour obtenir ainsi une fréquence f0,
et le retour du signal traité vers le circuit de commande conjointement avec un signal de différence de phase, généré par une comparaison de f et f0 ;
l'ajustement de sorties des signaux de commande P1 et P2 par le circuit de commande selon le signal de rétroaction ; et
la répétition des étapes ci-dessus, pour que le système soit exploité stablement au point de fréquence.
